# EUROPÄISCHE PATENTSCHRIFT

(11) **EP 1 649 537 B1**
(45) Veröffentlichungstag und Bekanntmachung des Hinweises auf die Patenterteilung: **14.05.2008**
(21) Anmeldenummer: 04714781.4
(22) Anmeldetag: 26.02.2004
(51) Int. Cl.: H01M 10/40

(54) **LI-POLYMER-BATTERIEN MIT SEPARATOR-DISPERSION UND VERFAHREN FÜR IHRE HERSTELLUNG**
LI POLYMER BATTERIES WITH SEPARATOR DISPERSION AND METHOD FOR THE PRODUCTION THEREOF
BATTERIES LI-POLYMERES A DISPERSION DE SEPARATEUR ET PROCEDE DE PRODUCTION ASSOCIE

(30) Priorität: 28.02.2003 DE 10308945
(43) Veröffentlichungstag der Anmeldung: 26.04.2006
(60) Teilanmeldung: 07103829.3
(73) Patentinhaber: Dilo Trading AG, 6300 Zug (CH)
(72) Erfinder: NAARMANN, Herbert, 67227 Frankenthal (DE); KRUGER, Franz Josef, 65817 Eppstein (DE)
(74) Vertreter: TBK-Patent
(86) Internationale Anmeldenummer: PCT/EP2004/001933
(87) Internationale Veröffentlichungsnummer: WO 2004/077588

(56) Entgegenhaltungen:
- EP-A- 0 942 485
- WO-A-99/44247
- DE-A1- 10 112 613
- US-B1- 6 218 051
- ANONYMOUS: "Dispersion" INTERNET ARTICLE, [Online] Februar 2005 (2005-02), XP002338526 Dokumentkennung RD-04-02073 Gefunden im Internet: URL:http://www.roempp.com/prod/index1.html > [gefunden am 2005-07-29]

## Beschreibung

Die Erfindung betrifft ein Herstellungsverfahren für eine Li-Polymer-Batterie mit einem neuen Separatorsystem.

Im Allgemeinen dient der Separator zur Trennung von Anode und Kathode und sollte auch ein Durchbrennen ("meltdown") bzw. ein Versagen ("breakdown") des Batteriesystems verhindern. Herkömmliche Separatorsysteme von Lithium-Polymer-Batterien sind z.B. in dem Buch "Lithium Ion Batteries, herausgegeben von M. Wakihara und O. Yamamoto, Seite 195 (1998), Verlag VCH, Weinheim" beschrieben. Weitere Informationen bezüglich herkömmlicher Separatorsysteme, insbesondere für Lithium-Polymer-Batterien, sind im "Handbook of Battery Materials, herausgegeben von I. O. Besenhard, Seiten 559 bis 563 (1998), Verlag VCH, Weinheim" beschrieben.

Herkömmlicherweise werden Membranen, z.B. auf der Basis von Polypropylen, Polyether oder Kombinationen davon, verwendet. Beispiele davon sind Celgard®, Setala®, HIPORE®, Exepol®. Außerdem sind Gelelektrolyt-Separatoren bekannt (z.B. von Bellcore). Diese können gemäß dem vorstehend genannten Handbook of Battery Materials auf Basis von Polyvinyldenflurid: Hexafluorpropylen (PVDF:HFP) aufgebaut sein. Diese Gelelektrolyt-Separatoren liegen in Stärken von ca, 50 µm vor. Außerdem weisen sie ca. 60 Gew.-% Polymer auf.

Idealerweise haben die in Batterien eingesetzten Separatoren keinen Ionentransportwiderstand. In der Praxis jedoch muss einiger Widerstand toleriert werden.

Typische Eigenschaften der vorstehend genannten mikroporösen Membranen, die als herkömmliche Separatoren eingesetzt werden, sind in der nachstehenden Tabelle 1 aufgeführt (aus Handbook of Battery Materials, Seite 558, 10.6).

**Tabelle 1**

| | Celgard 2400® | Celgard 2300® |
|---|---|---|
| Struktur | 1 Schicht: PP | 3 Schichten: PP/PE/PP |
| Stärke [µm] | 25 | 25 |
| Porosität (%) | 38 | 38 |
| Luftdurchlässigkeit | 35 | 25 |
| Durchschlagfestigkeit | 380 | 480 |

Ein weiteres wesentliches Charakteristikum von Separatoren ist das Tränken bzw. Benetzen des Separators mit Elektrolyt, d.h. mit Leitsalz im jeweiligen optimalen aprotischem Lösungsmittel. Weitere Probleme mit den herkömmlichen Separatorsystemen gibt es beim Einbringen des Separators zwischen Anode und Kathode.

Deshalb liegt der Erfindung ein vollkommen neues Verfahrenskonzept zugrunde, das durch eine neue Materialkombination die vorstehend genannten Probleme der herkömmlichen Separatorsysteme in Lithium-Polymer-Batterien verbessern soll.

Daher ist es die Aufgabe der Erfindung, ein Herstellungsverfahren für eine Lithium-Polymer-Batterie mit einem verbesserten Separatorsystem bereitzustellen.

Diese Aufgabe kann beispielsweise durch alternative Herstellungsverfahren für eine Lithium-Polymer-Batterie nach einem der Ansprüche 1 und 2 gelöst werden.

Die erfindungsgemäß hergestellte Lithium-Polymer-Batterie hat wenigstens eine Anode und Kathode, sowie einen Separator, der zur Trennung von Anode und Kathode eine Separatorschicht mit einer Dispersion aufweist.

Bevorzugte Ausführungsformen des Herstellungsverfahrens für die Lithium-Polymer-Batterie gemäß der Erfindung sind in den Unteransprüchen definiert.

Im folgenden werden die erfindungsgemäß hergestellte Lithium-Polymer-Batterie und deren bevorzugte Ausführungsformen, sowie das erfindungsgemäße Herstellungsverfahren für die Lithium-Polymer-Batterie und bevorzugte Ausführungsformen dafür an Hand von Figuren näher erläutert.

Es zeigen:
Fig. 1a eine Anode einer erfindungsgemäß hergestellten Lithium-Polymer-Batterie;
Fig. 1b eine Kathode einer erfindungsgemäß hergestellten Lithium-Polymer-Batterie; und
Fig. 2 eine erfindungsgemäß hergestellte Lithium-Polymer-Batterie mit einer Separatorschicht zwischen Anode und Kathode.

Anschließend wird die Li-Polymer-Batterie anhand einer ersten Ausführungsform näher erläutert.

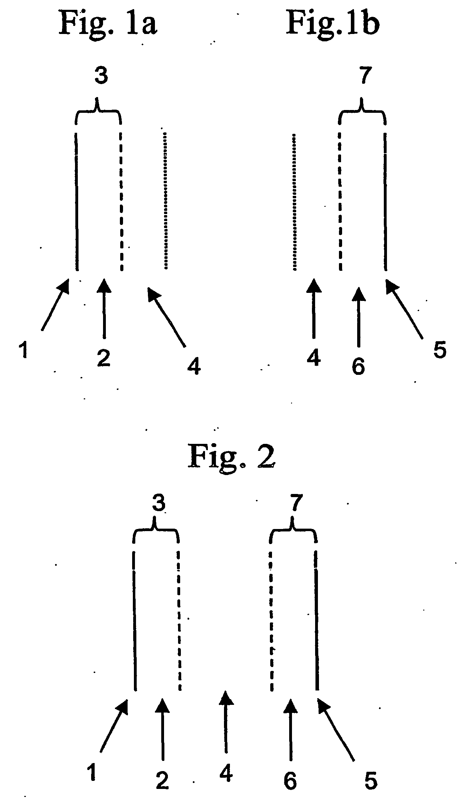

Die Fig. 1a zeigt eine Anode 3 mit Ableiter 1 und Anodenmasse 2. Auf der Anodemasse 2 ist der Separator in Form einer Separatorschicht 4 ausgebildet. Analog kann die Kathode 7 mit einem Ableiter 5 und einer Kathodenmasse 6 mit einer .. Separatorschicht 4 versehen sein, wie in Fig. 1b gezeigt ist. Die Separatorschicht 4, die eine Dispersion aufweist, ist in der in Fig. 2 gezeigten Lithium-Polymer-Batterie zwischen der Anode 3 und Kathode 7 angeordnet. Im Allgemeinen genügt eine Separatorschicht 4, die zwischen Anode 3 und Kathode 7 jeweils an die Elektrodenmasse 2,6 angrenzend angeordnet ist, so dass ein laminiertes Verbundsystem mit mehrschichtigem Aufbau ensteht.

Im Allgemeinen umfasst die Anode 3 bzw. die Kathode 7 einen Ableiter 1,5 und eine Elektrodenmasse 2,6. Der Ableiter 1 der Anode 3 besteht bevorzugt aus einer Kupfer-Folie oder einem Kupfer-Netz, jedoch können auch weitere für Anodenmaterialien geeignete Metalle und Metalllegierungen eingesetzt werden. Der Ableiter 5 der Kathode 7 besteht bevorzugt aus Aluminium und kann als Folie oder Netz ausgebildet sein. Auch hier ist die Verwendung nicht auf Aluminium beschränkt, sondern alle für Kathodenmaterialien*üblicher Weise eingesetzten Metalle und Metalllegierungen können ebenso eingesetzt werden. Des weiteren sind die Ableiter 1,5 bevorzugt geprimert, um die Elektronenleitung weiter zu verbessern.

Die Schichtdicke der Anodenmasse 2 beträgt bevorzugt 20-60 µm und die Schichtdicke der Kathodenmasse 6 bevorzugt 20-80 µm.

In der Li-Polymer-Batterie geeigneter Weise eingesetzte Dispersionen für den Separator umfassen Leitsalze, Lösungsmittel und Gerüstsubstanzen. Zusätzlich können sie Leitsalzadditive enthalten. Leitsalze können aus der aus LiPF₆, LiClO₄, Li-Triflaten und deren Derivaten, sowie Li-Organoboraten bestehenden Gruppe ausgewählt sein. Jedoch können auch Herkömmlicherweise eingesetzte Lithium-Leitsalze., wie sie z.B. im "Handbook of Battery Materials, Seiten 462 und 463" beschrieben sind, verwendet werden.

Leitsalzadditive sind Hilfsstoffe, die beispielsweise als Donor/Acceptor-Komponenten in den Elektronentransfer eingreifen. Bevorzugt eingesetzt werden Polyvinylpyrrolidone, Polyketone, Polyether, wahlweise mit verkappten Endgruppen wie z.B. Alkyl- (z.B. -CH₃) und/oder Methacryloylresten (CH₂=C(CH₃)CO-), Polyvinylether, Polyvinylpyridine, Polyvinylimidazole, Polythiophene, insbesondere deren Homo- und Copolykondensate, und Copolymere aus diesen Verbindungen. Ferner können diese Leitsalzadditive auch Quellmittel für die aprotischen Lösungsmittel darstellen. Bevorzugt eingesetzte Quellmittel für die aprotischen Lösungsmittel sind z.B. Terpolymere von Fluorelastomeren, die auch unter der Marke Dyneon® bekannt sind, oder Fluorelastomercopolymere. Weiterhin können als Leitsalzadditive auch Polybutadiene, Polyisoprene und/oder andere Kautschuke sowie Polyhydroxyl-Derivate, wie Stärke, Zucker und Polyvinylalkohole, die weitgehend mit Alkyl- oder Methacryloylgruppen verkappt sind und deren nicht veretherte oder veresterte OH-Gruppen mit Lithium substituiert als LiO-Einheiten vorliegen, erfindungsgemäß eingesetzt werden.

Als Lösungsmittel für die Lithium-Polymer-Batterie können indifferente Komponenten, vorzugsweise aprotische Lösungsmittel wie Alkylcarbonate, und Perfluoralkylether, sowie alkylierte Ethylen- und/oder Propylenglykole eingesetzt werden. Beispiele solcher Alkylcarbonate sind z.B. Propylen-, Ethylen-, Dimethylcarbonate und dergleichen. Außerdem können auch Mischungen dieser Lösungsmittel eingesetzt werden.

Als Gerüstsubstanzen werden vorzugsweise anorganische Materialien wie MgO, CaO, Al₂O₃, SiO₂ und TiO₂, Silikate wie Inselsilikate, z.B. Forsterit, Ringsilikate, z.B. Benitoit, Ketten- und Bandsilikate wie Wollastonit und Spodumen, Schichtsilikate wie Serpentin, Kaolinit, Talk, Pyrophyllit, Glimmer, Montmorillonit, Bentonit und Vermiculit, und Zeolithe oder ähnliches, Borate wie etwa Li-Metaborat, Phosphate wie Ca₂P₂O₇, Titanate wie Ca-Titanat, Zirkonate, Wolframate, Molybdate, und CaSnO₃ und dergleichen eingesetzt. Weiterhin eignen sich als Gerüstsubstanzen auch offenporige Polykondensate, Addukte oder andere Polymere, solange sie eine offenporige Struktur aufrecht erhalten können.

Bevorzugt eingesetzte Gerüstsubstanzen haben einen Teilchendurchmesser von 0,5-20 µm. Die Gerüstsubstanzen können jedoch auch aus Partikeln bestehen, die Einzelteilchen umfassen. In diesem Falle liegt der Gesamtpartikeldurchmesser der Gerüstsubstanzen bevorzugt im Bereich von 10 bis 20 µm.

Die Dispersion besteht bevorzugt aus einem oder mehreren Leitsalzen in einer Menge von 5-60 Gew.-% optional einem oder mehreren Leitsalzadditiven in einer Menge von 0,1 bis 20 Gew.-%, einem oder mehreren Lösungsmitteln in einer Menge von 20-50 Gew.-% und einer oder mehreren Gerüstsubstanzen in einer Menge von 20-60 Gew.-%, jeweils bezogen auf die gesamte Dispersion.

Die vom Separator umfasste Dispersion dient einerseits als Leitsalz- und Elektrolyt-Quelle und verleiht dem System zusätzlich mechanische Stabilität durch die in der Dispersion enthaltenen Gerüstsubstanzen. Weiterhin können in der erfindungsgemäß eingesetzten Dispersion, insbesondere einer Leitsalz-Dispersion, Leitfähigkeitsverluste zwischen Anode und Kathode verringert bzw. vermieden werden. Gerade durch die hohe mechanische Stabilität der Dispersion wird ein Durchbrennen bzw. Kurzschluss im Separator verhindert.

In einer zweiten Ausführungsform besteht abweichend von der ersten Ausführungsform die Separatorschicht 4 aus wenigstens zwei unterschiedlichen Separatorschichten, die zwischen der Anode 3 und der Kathode 7 angeordnet sind. Durch zwei oder mehrere Separatorschichten 4 mit unterschiedlichen Zusammensetzungen, die jeweils an die Anodenmasse 2 als auch die Kathodenmasse 6 anliegen, kann die Hafttung der Separatorschicht 4 an die jeweilige Elektrodenmasse 2,6 gewährleistet werden, auch wenn die Elektrodenmassen 2,6 aus unterschiedlichen Materialien aufgebaut sind.

Alle übrigen Merkmale, wie erfindungsgemäß eingesetzte Materialien oder Anwendungsbereiche können wie in der ersten Ausführungsform beschrieben ausgewählt und variiert werden.

In einer ersten Ausführungsform des Herstellungsverfahrens werden zur Herstellung einer für einen Separator eingesetzten Dispersion sämtliche Einsatzstoffe, wie etwa Leitsalze, Lösungsmittel, Gerüstsubstanzen und optional Leitsalzadditive, in einem Dissolver bei Umdrehungen von etwa 50-2500 U/min vermischt, bis eine einphasige pastöse Dispersion vorliegt. Die Einsatzstoffe können entweder alle gleichzeitig zusammengerührt werden oder es kann bevorzugt das Leitsalz vorgelegt und anschließend ein oder mehrere Lösungsmittel unter Rühren zugegeben werden, um anschließend auch noch Gerüstsubstanzen bzw. Leitsalzadditive unter Rühren zuzumischen. Hierin erfolgt das Rühren in einem Dissolver bei annähernd 50-2500 U/min, bevorzugt bei 500-2000 U/min und insbesondere bei 1000-2000 U/min. Nach der Zugabe aller Einsatzstoffe kann die Dispersion beispielsweise auch bei geringerer Rührgeschwindigkeit wie etwa 1000 U/min solange weiter gerührt werden, bis eine einphasige pastöse Dispersion vorliegt. Diese erfindungsgemäß hergestellte, einphasige pastöse Dispersion kann mittels einer Standardpastiereinrichtung auf die Anodenmasse 2 und/oder Kathodenmasse 6 aufgetragen werden, um eine Lithium-Polymer-Batterie herzustellen. Hierbei kann die Beschichtung der Elektroden 3,7 bzw. Elektrodenmassen 2,6 bevorzugt kontinuierlich über Extruder oder Beschichtungsanlagen erfolgen. In diesem Verfahren wird die Dispersion bevorzugt mittels Breitschlitzdüsen und/oder Pastiermaschinen parallel zur Extrusion der Elektrodenmassen 2,6 als Separatorschicht 4 aufgetragen. Die Separatorschicht beträgt bevorzugt 10-50 µm und weiter bevorzugt 20-35 µm.

Während in einer Ausführungsform des Herstellungsverfahrens das Verfahren so durchgeführt wird, dass nur die Anodenmasse 2 bzw. die Kathodenmasse 6 mit der Dispersion beaufschlagt wird, kann alternativ in einer weiteren Ausführungsform die Dispersion jedoch auch auf die Anodenmasse 2 und die Kathodenmasse 7 aufgetragen werden. So wird ein Laminatverbund aus Anode 3 und Kathode 7 mit wenigstens zwei,Separatorschichten 4 als Trennschicht hergestellt, so dass die Schichtstärke der gesamten Separatorschicht 4 gleich 15-70 µm und vorzugsweise 20-50 µm beträgt

Somit wird durch das erfindungsgemäße Herstellungsverfahren ein einfaches und kostengünstiges Verfahren zur Herstellung von Lithium-Polymer-Batterien geschaffen.

Vorzugsweise erfolgt das erfindungsgemäße Herstellungsverfahren für Lithium-Polymer-Batterien unter Ausschluss von Feuchtigkeit. Hierzu kann unter Inertgasatmosphäre, wie zum Beispiel unter Argonatmosphäre die Herstellung der einzelnen Elektrodenmassenschichten 2,6 bzw. Separatorschichten 4 durchgeführt werden.

Anschließend werden .zur weiteren Veranschaulichung der erfindungsgemäß hergestellten Lithium-polymer-Batterien sowie der erfindungsgemäßen Herstellungsverfahren für die Herstellung der Lithium-Polymer-Batterien, umfassend ein Verbundsystem aus Anode/Separatorschicht(en)/Kathode anhand von Beispielen näher erläutert.

### Beispiel 1

Herstellen einer Dispersion mit LiPF₆ als Leitsalz. 25 Gewichtsteile LIPF₆ als Leitsalz wurden mit 20 Gewichtsteile Ethylencarbonat (EC) und 10 Gewichtsteile Propylencarbonat (PC) als Lösungsmittel vermischt und in einem Disperser 60 min bei 1000 U/min gerührt. Dann wird die erhaltene Dispersion mit 25 Gewichtsteile MgO und 15 Gewichtsteile Glimmer als Gerüstsubstanzen sowie mit 6 Gewichtsteile eines Fluorpolymeren auf Basis von PVDF/HFP (Kynar 2801®) versetzt und bei Raumtemperatur weitere 60 Minuten bei 1000 U/min gerührt, so dass eine einphasige Dispersion 4 entstand. Diese Dispersion wurde zur Ausbildung einer Separatorschicht mittels einer Pastiermaschine sowohl auf die Anodenmassen 2 als auch auf die Kathodenmasse 6 wie in den Figuren 1A und 1B gezeigt in einer jeweils 20µm starken Schicht aufgetragen.

### Beispiel 2

Das Verfahren wurde analog zum Beispiel 1 durchgeführt, jedoch war das verwendete Leitsalz Lithiumoxalatoborat. Weiterhin wurden sämtliche Einsatzstoffe bei 50°C und 1,3 Pa (10⁻² Torr) 60 Minuten lang entgast und das gesamte Verfahren wurde unter einer Argon-Atmosphäre durchgeführt. Die vermischten Einsatzstoffe waren wie folgt:

| | | | |
|---|---|---|---|
| 1. | 20 | Gewichtsteile | Lioxalato-borat |
| 2. | 10 | Gewichtsteile | Ethylencarbonat EC |
| 3. | 10 | Gewichtsteile | Propylencarbonat PC |
| 4. | 20 | Gewichtsteile | Monoglykol-bis-tetra-fluorethylether |
| 5. | 25 | Gewichtsteile | MgO |
| 6. | 5 | Gewichtsteile | Polyvinylpyrrolidon (Luviskol K90®) |

### Beispiele 3 bis 10

In den Beispielen 3 bis 10 erfolgte die Herstellung von Separat-Dispersionen analog zu Beispiel 1 und die eingesetzten Einsatzstoffe wie Leitsalz, Lösungsmittel, Gerüstsubstanz und Leitsalzadditiv sind in der Tabelle 2 angegeben. Außerdem sind die jeweiligen Gewichtsprozente mit angegeben.

**Tabelle 2**

| Beispiel Nr. | Leitsalz/ Gew.-T. | L.M./Gew.-T. | Gerüstsubstanz/ Gew.-T. | Leitsalzadditiv/ Gew.-T. |
|---|---|---|---|---|
| Beispiel 3 | LiPF₆/20 | EC/20, DEC/20 | MgO/30 | Kynar/10 |
| Beispiel 4 | LiPF₆/25 | EC/20, DMC/20 | MgO/25 Glimmer/10 | Kynar/10 |
| Beispiel 5 | LiOB/20 | DME/20, DMC/20 | MgO/20 Chrystotil/10 | Dyneon/10 |
| Beispiel 6 | Li-Triflat/ 30 | DMC/10, DEC/10 | Al₂O/25 CaO₃/10 | Kynar/15 |
| Beispiel 7 | LiCl₄/25 | EC/25, PC/25 | MgO/10 | Kynar/15 |
| Beispiel 8 | LiOB/10 LiPF₆/20 | EC/20, PC/20 | MgO/10 Li-Metaborat/10 | Kynar/10 |
| Beispiel 9 | LiPF₆/20 | EC/20, DEC/20 | Vermiculit/20 MgO/10 | Kynar/10 |
| Beispiel 10 | LiPF₆/25 | EC/20, DMC/20 Fluorether/10 | Zeolith/10 CaO/10 | Dyneon/5 |

| | | | | |
|---|---|---|---|---|
| EC = Ethylencarbonat PC = Propylencarbonat DEC = Diethylcarbonat DMC = Dimethylcarbonat DME = Ethylenglykoldimethylether Fluorether = Monoglykol-bis-tetra-fluoralkylether LiOB = Li-oxalatoborat Kynar = Fluorpolamer auf Basis von PVDF/HFP (Kynar 2801®) Dyneon = Terpolymer PVDF/HFP/Perfluoralkoxyether (Dyneon 210®) | | | | |

Gemäß Beispiel 1 wurden die Komponenten vermischt und die jeweils enthaltene Dispersion auf die Anodenmassen 2 bzw. Kathodenmassen 6 in einer Schicht von jeweils ca. 20 µm Stärke aufgetragen. Hierbei wurden alle Arbeiten unter Argonatmosphäre unter Ausschluss von Feuchtigkeit ausgeführt.

### Beispiel 11

### Herstellen einer Lithium-Polymer-Batterie

### a) Herstellung der Kathode 7

Auf eine Al-Folie (Stärke: 18 µm, Breite 150 mm) mit einer Primerschicht (3 µm Stärke) aus einem Fluorterpolymer (Dyneon THV 220 D) mit 30 Gew.-% leitfähigem Ruß (Ensaco®-Ruß) (Gew.-% sind bezogen auf den Feststoffanteil des Fluorterpolymeren) wurde mittels eines Extruders eine Folie aus Kathodenmasse in einer Schichtstärke von 30 µm aufgetragen:

| | | |
|---|---|---|
| LiCooxid SS 5 | 75 | Gewichtsteile |
| LiOB | 5 | Gewichtsteile |
| Polymerbinder Kynar 2801®¹ | 10 | Gewichtsteile |
| Aprotisches Lösungsmittel PC | 10 | Gewichtsteile |

| | | |
|---|---|---|
| ¹Fluorpolymer auf Basis von PVDF/HFP | | |

### b) Auftragung der Separatorschicht 4

Auf die unter Punkt 11a hergestellte Kathodenmasse 6 mit Ableiterfolie 5 wurde die im Beispiel 1 hergestellte einphasige Dispersion in einer ca. 20 µm starken Schicht aufgetragen.

### c) Herstellen des Verbundsystems mit der Anode 3

Eine Ableiterfolie 1 (Cu, Stärke; 18 µm, Breite 150 mm) wurde mittels eines Collin-Extruders bei 120 - 130°C mit einer Anodenmasse 2 in einer Stärke von 35 um beaufschlagt:

| | | |
|---|---|---|
| MCMB 25/28®¹ | 75 | Gewichtsteile |
| LiOB | 10 | Gewichtsteile |
| Polymerbinder Kynar 2801®² | 8 | Gewichtsteile |
| Aprotisches Lösungsmittel PC | 7 | Gewichtsteile |

| | | |
|---|---|---|
| ¹ Mesocarbonmicrobeads (Osaka Gas Chemicals Co., Ltd.; synthetischer Graphit) ² Fluorpolymer auf Basis von PVDF/HFP | | |

Die somit erhaltene Anode 3 wurde dann mit der unter den Punkten a und b erhaltenen Kathode 7 mit aufgetragener Separatorschicht 4 zu einem Verbundsystem Ableiterfolie Al/Kathodenmasse/Separator/Anodenmasse/Ableiterfolie Cu kombiniert.

### d) Herstellen einer Wickelzelle

Das oben beschriebene Verbundsystem wurde auf einer Wickelmaschine (∅ 7,5 cm) gewickelt. Die Ableiterfolien 1,5 wurden durch Laser-Schweißen kontaktiert, sowie mit Ableiterscheiben an jedem Pol der Batterie versehen. Danach wurde das gesamte System in einer Schrumpffolie eingehaust.

### e) Batterietest-Laden/Entladen

Die entsprechend Beispiel 11 d) hergestellte Wickelzelle wurde formiert und geladen und zwar in einem 3-Stufenprozess mit einem Strom von 0,15 mA/m² galvanostatisch bei 1,5 V, 2,8 V, 4,2 V und dann potentiostatisch bei 4,2 V. Hierfür wurde ein Ladeprogramm und Geräte der Firma Digatron Aachen eingesetzt. Die Entladung erfolgte ebenfalls mit einem Strom von 0,15 mA/m² bis zu einer Entladespannung von 2,8 V.

Die gemessene Entladekapazität betrug 35 Ah und es wurde nach 150 Zyklen ein Fading von < 2,5 % festgestellt (bei Temperaturen bis zu 60°C).

### f) Vergleichsversuche

Es wurde statt der erfindungsgemäß hergestellten Lithium-Polymer-Batterie eine Batterie eingesetzt, in der die Separatormasse eine Polypropylenmembran (Cellgard®) war. Die Separatormembran war mit einer 0,5 M Li-Oxalatoboratlösung in Dimethyl-/Diethylcarbonat (1:1 Volumenanteil) getränkt. Die erhaltenen Entladekapazitäten waren vergleichbar zu den Ergebnissen mit den Batterien mit Dispersionen im Separator. Das Fading bei Raumtemperatur betrug ca. 2 - 2,5 %, jedoch bei 60°C schon 3,5 - 4 %, und war somit gegenüber den erfindungsgemäß hergestellten Li-Polymer-Batterien mit Dispersionen im Separator deutlich schlechter.

## Patentansprüche

1. Herstellungsverfahren für eine Li-Polymer-Batterie mit einer Anode (3) und einer Kathode (7), sowie mit einem zur Trennung von Anode (3) und Kathode (7) vorgesehenen Separator (4) in Form einer Dispersionsschicht, **dadurch gekennzeichnet, dass** eine durch Mischen in einem Dissolver bei 50 bis 2500 U/min erhältliche Dispersion aus Leitsalz, Lösungsmittel, Gerüstsubstanz und optionalen Leitsalzadditiven als Dispersionsschicht (4) auf die Anodenmasse (2) bzw. die Kathodenmasse (6) aufgebracht wird und anschließend die Anode (3) und die Kathode (7) über die Dispersionsschicht (4) miteinander laminiert werden.

2. Herstellungsverfahren für eine Li-Polymer-Batterie mit einer Anode (3) und einer Kathode (7), sowie mit einem zur Trennung von Anode (3) und Kathode (7) vorgesehenen Separator (4) in Form einer Dispersionsschicht, **dadurch gekennzeichnet, dass** eine durch Mischen in einem Dissolver bei 50 bis 2500 U/min erhältliche Dispersion aus Leitsalz, Lösungsmittel, Gerüstsubstanz und optionalen Leitsalzadditiven als jeweils eine Dispersionsschicht (4) auf die Anodenmasse (2) und die Kathodenmasse (6) aufgebracht wird und anschließend die Anode (3) und die Kathode (7) über die Dispersionsschichten (4) miteinander laminiert werden.

3. Herstellungsverfahren nach Patentanspruch 1 oder 2, **dadurch gekennzeichnet, dass** die Herstellung der Elektroden (3, 7) kontinuierlich über Extruder oder Beschichtungsanlagen erfolgt, und dass parallel die Dispersion für die Dispersionsschicht (4) mittels Breitschlitzdüsen und/oder Pastiermaschinen auf die Elektrodenmassen (2, 6) aufgetragen wird.

4. Herstellungsverfahren nach einem der Patentansprüche 1 bis 3, **dadurch gekennzeichnet, dass** das Verfahren unter Ausschluss von Feuchtigkeit und insbesondere unter Argon-Atmosphäre erfolgt.

5. Herstellungsverfahren nach einem der vorangehenden Ansprüche, **dadurch gekennzeichnet, dass** die Dispersionsschicht (4) eine Schichtdicke von 10-50 µm aufweist.

6. Herstellungsverfahren nach einem der vorangehenden Ansprüche, **dadurch gekennzeichnet, dass** die Dispersionsschicht (4) eine Schichtdicke von 15-70 µm aufweist.

7. Herstellungsverfahren nach einem der vorangehenden Ansprüche, **dadurch gekennzeichnet, dass** die Anodenmasse (2) eine Schichtdicke von 20-60 µm aufweist.

8. Herstellungsverfahren nach einem der vorangehenden Ansprüche, **dadurch gekennzeichnet, dass** die Kathodenmasse (6) eine Schichtdicke von 20-80 µm aufweist.

9. Herstellungsverfahren nach einem der vorangehenden Ansprüche, **dadurch gekennzeichnet, dass** die Leitsalze ausgewählt sind aus LiPF6, LiClO4, Li-Triflaten und deren Derivaten, sowie Li-Organoboraten.

10. Herstellungsverfahren nach einem der vorangehenden Ansprüche, **dadurch gekennzeichnet, dass** die Dispersion Leitsalze in Mengen von 5-60 Gew.-% bezogen auf die gesamte Dispersion enthält.

11. Herstellungsverfahren nach einem der vorangehenden Ansprüche, **dadurch gekennzeichnet, dass** das Lösungsmittel ausgewählt ist aus aprotischen Lösungsmitteln wie alkylierten Glykolen, Perfluoralkylethern, Alkylcarbonaten und deren Mischungen.

12. Herstellungsverfahren nach einem der vorangehenden Ansprüche, **dadurch gekennzeichnet, dass** die Dispersion Lösungsmittel in einer Menge von 20-50 Gew.-% bezogen auf die gesamte Dispersion enthält.

13. Herstellungsverfahren nach einem der vorangehenden Ansprüche, **dadurch gekennzeichnet, dass** die Gerüstsubstanzen ausgewählt sind aus der Gruppe der anorganischen oder organischen Verbindungen, Metalloxiden, Silikaten, Zeolithen, Boraten, Titanaten, Zirkonaten, Wolframaten, Molybdaten oder offenporigen Polykondensaten, Addukten oder andere Polymeren.

14. Herstellungsverfahren nach einem der vorangehenden Ansprüche, **dadurch gekennzeichnet, dass** die Dispersion Gerüstsubstanzen in einer Menge von 20-60 Gew.-% bezogen auf die gesamte Dispersion enthält.

15. Herstellungsverfahren nach einem der vorangehenden Ansprüche, **dadurch gekennzeichnet, dass** die Leitsalzadditive ausgewählt sind aus der Gruppe, umfassend Elektronen-Donor/Acceptorkomponenten, Quellmitteln für aprotische Lösungsmittel und veresterten oder veretherten Polyhydroxyl-Derivaten.

16. Herstellungsverfahren nach einem der vorangehenden Ansprüche, **dadurch gekennzeichnet, dass** die Dispersion Leitsalzadditive in einer Menge von 0,1-20 Gew.-% bezogen auf die gesamte Dispersion enthält.

17. Herstellungsverfahren nach einem der vorangehenden Ansprüche, **dadurch gekennzeichnet, dass** die Gerüstsubstanz einen Teilchendurchmesser von 0,5-20 µm und einen Gesamtpartikel-Durchmesser zwischen 10 und 20 µm hat.

18. Herstellungsverfahren nach Anspruch 13 oder 14, **dadurch gekennzeichnet, dass** die Gerüstsubstanz eine anorganische Verbindung und insbesondere ein Metalloxid ist.

## Claims

1. A method of manufacturing an Li polymer battery with an anode (3) and a cathode (7), and with a separator (4) provided for separating the anode (3) and cathode (7) in the form of a dispersion layer, **characterised in that** a dispersion of conducting salt, solvent, matrix material and optional conducting salt additives obtainable by mixing in a dissolver at 50 to 2500 rpm is applied as a dispersion layer (4) onto the anode composition (2) or cathode composition (6) and then the anode (3) and the cathode (7) are laminated to one another by means of the dispersion layer (4).

2. A method for manufacturing an Li polymer battery with an anode (3) and a cathode (7), and with a separator (4) provided for separating the anode (3) and cathode (7) in the form of a dispersion layer, **characterised in that** a dispersion of conducting salt, solvent, matrix material and optional conducting salt additives obtainable by mixing in a dissolver at 50 to 2500 rpm is applied in each case as a dispersion layer (4) onto the anode composition (2) and the cathode composition (6) and then the anode (3) and the cathode (7) are laminated to one another by means of the dispersion layers (4).

3. A manufacturing method according to claim 1 or claim 2, **characterised in that** manufacture of the electrodes (3, 7) proceeds continuously by means of extruders or coating installations, and **in that**, in parallel, the dispersion for the dispersion layer (4) is applied by means of slot dies and/or paste applicators onto the electrode compositions (2, 6).

4. A manufacturing method according to any one of claims 1 to 3, **characterised in that** the method proceeds with exclusion of moisture and in particular under an argon atmosphere.

5. A manufacturing method according to any one of the preceding claims, **characterised in that** the dispersion layer (4) has a layer thickness of 10-50 µm.

6. A manufacturing method according to any one of the preceding claims, **characterised in that** the dispersion layer (4) has a layer thickness of 15-70 µm.

7. A manufacturing method according to any one of the preceding claims, **characterised in that** the anode composition (2) has a layer thickness of 20-60 µm.

8. A manufacturing method according to any one of the preceding claims, **characterised in that** the cathode composition (6) has a layer thickness of 20-80 µm.

9. A manufacturing method according to any one of the preceding claims, **characterised in that** the conducting salts are selected from among LiPF₆, LiClO₄, Li triflates and the derivatives thereof, and Li organoborates.

10. A manufacturing method according to any one of the preceding claims, **characterised in that** the dispersion contains conducting salts in quantities of 5-60 wt.% relative to the entire dispersion.

11. A manufacturing method according to any one of the preceding claims, **characterised in that** the solvent is selected from among aprotic solvents such as alkylated glycols, perfluoroalkyl ethers, alkyl carbonates and mixtures thereof.

12. A manufacturing method according to any one of the preceding claims, **characterised in that** the dispersion contains solvent in a quantity of 20-50 wt.% relative to the entire dispersion.

13. A manufacturing method according to any one of the preceding claims, **characterised in that** the matrix materials are selected from the group of inorganic or organic compounds, metal oxides, silicates, zeolites, borates, titanates, zirconates, tungstates, molybdates or open-pored polycondensation products, adducts or other polymers.

14. A manufacturing method according to any one of the preceding claims, **characterised in that** the dispersion contains matrix materials in a quantity of 20-60 wt.% relative to the entire dispersion.

15. A manufacturing method according to any one of the preceding claims, **characterised in that** the conducting salt additives are selected from the group comprising electron donor/acceptor components, swelling agents for aprotic solvents and esterified or etherified polyhydroxyl derivatives.

16. A manufacturing method according to any one of the preceding claims, **characterised in that** the dispersion contains conducting salt additives in a quantity of 0.1-20 wt.% relative to the entire dispersion.

17. A manufacturing method according to any one of the preceding claims, **characterised in that** the matrix material has a particle diameter of 0.5-20 µm and an overall particle diameter of between 10 and 20 µm.

18. A manufacturing method according to claim 13 or claim 14, **characterised in that** the matrix material is an inorganic compound and in particular a metal oxide.

## Revendications

1. Procédé de fabrication pour une batterie Li-polymère, comprenant une anode (3) et une cathode (7) ainsi qu'un séparateur (4) prévu pour la séparation entre l'anode (3) et la cathode (7) et réalisé sous la forme d'une couche de dispersion, **caractérisé en ce qu'**une dispersion, obtenue par mélange d'un dissolvant à 50 à 2500 tours/mn à partir d'un sel conducteur, d'un solvant, d'une substance d'ossature et d'additifs de sels conducteurs optionnels, est appliquée sous forme de couche de dispersion (4) sur la masse d'anode (2) ou la masse de cathode (6) et, ensuite, l'anode (3) et la cathode (7) sont laminées ensemble en intercalant la couche de dispersion (4).

2. Procédé de fabrication d'une batterie Li-polymère comprenant une anode (3) et une cathode (7) ainsi qu'un séparateur (4) prévu pour la séparation entre l'anode (3) et la cathode (7) et réalisé sous la forme d'une couche de dispersion, **caractérisé en ce qu'**une dispersion, obtenue par mélange dans un dissolvant à 50 à 2500 tours/mn, d'un sel conducteur, d'un solvant, d'une substance d'ossature et d'additifs de sels conducteurs optionnels, est appliquée chaque fois sous forme de couche de dispersion (4) sur la masse d'anode (2) et la masse de cathode (6) et, ensuite, l'anode (3) et la cathode (7) sont laminées ensemble en intercalant les couches de dispersion (4).

3. Procédé de fabrication selon la revendication 1 ou 2, **caractérisé en ce que** la fabrication des électrodes (3, 7) se fait de façon continue par des extrudeuses ou des installations d'enduction, et **en ce que**, parallèlement, la dispersion pour la couche de dispersion (4) est appliquée sur les masses d'électrode (2, 6), au moyen de buses à fentes larges et/ou de machines d'empâtage.

4. Procédé de fabrication selon l'une des revendications 1 à 3, **caractérisé en ce que** le procédé est appliqué en excluant l'humidité et, en particulier, sous atmosphère d'argon.

5. Procédé de fabrication selon l'une des revendications précédentes, **caractérisé en ce que** la couche de dispersion (4) présente une épaisseur de couche de 10 à 50 µm.

6. Procédé de fabrication selon l'une des revendications précédentes, **caractérisé en ce que** la couche de dispersion (4) présente une épaisseur de couche de 15 à 70 µm.

7. Procédé de fabrication selon l'une des revendications précédentes, **caractérisé en ce que** la masse d'anode (2) présente une épaisseur de couche de 20 à 60 µm.

8. Procédé de fabrication selon l'une des revendications précédentes, **caractérisé en ce que** la masse de cathode (6) présente une épaisseur de couche de 20 à 80 µm.

9. Procédé de fabrication selon l'une des revendications précédentes, **caractérisé en ce que** les sels conducteurs sont choisis parmi LiPF6, LiClO4, des triflates et leurs dérivés, ainsi que des organo-borates de Li.

10. Procédé de fabrication selon l'une des revendications précédentes, **caractérisé en ce que** la dispersion contient des sels conducteurs en des quantités de 5 à 60% en poids, en se référant à la dispersion totale.

11. Procédé de fabrication selon l'une des revendications précédentes, **caractérisé en ce que** le solvant est sélectionné parmi des solvants aprotiques, tels que des glycols alkylés, des perfluoralkyléthers, des alkylcarbonates et leurs mélanges.

12. Procédé de fabrication selon l'une des revendications précédentes, **caractérisé en ce que** la dispersion contient des solvants en une quantité de 20 à 50 % en poids, en se référant à la dispersion totale.

13. Procédé de fabrication selon l'une des revendications précédentes, **caractérisé en ce que** la substance d'ossature est sélectionnée dans le groupe des combinaisons non organiques ou organiques, des oxydes métalliques, des silicates, des zéolithes, des borates, des titanates, de zirconates, des tungtanates, des molybdates ou de polycondensats à pores ouvertes, des adduits ou d'autres polymères.

14. Procédé de fabrication selon l'une des revendications précédentes, **caractérisé en ce que** la dispersion contient des substances d'ossature en une quantité de 20 à 60 % en poids, en se référant à la dispersion totale.

15. Procédé de fabrication selon l'une des revendications précédentes, **caractérisé en ce que** les additifs de sels conducteurs sont sélectionnés dans le groupe comprenant des composants donneurs/accepteurs d'électrons, des agents gonflants pour des solvants aprotiques et des dérivés de polyhydroxyl estérifiés ou éthérifiés.

16. Procédé de fabrication selon l'une des revendications précédentes, **caractérisé en ce que** la dispersion contient des additifs de sels conducteurs en une quantité de 0,1 à 20 % en poids, en se référant à la dispersion totale.

17. Procédé de fabrication selon l'une des revendications précédentes, **caractérisé en ce que** la substance d'ossature présente un diamètre de particule de 0,5 à 20 µm et un diamètre de particule global compris entre 10 et 20 µm.

18. Procédé de fabrication selon l'une des revendications 13 ou 14, **caractérisé en ce que** la substance d'ossature est une combinaison non organique et en particulier une oxyde de métal.
